# EUROPEAN PATENT SPECIFICATION

(11) **EP 2 554 753 B1**
(45) Date of publication and mention of the grant of the patent: **07.12.2016**
(21) Application number: 11759093.5
(22) Date of filing: 15.02.2011
(51) Int. Cl.: E02F 9/16, B62D 25/02

(54) **Small-sized hydraulic excavator**
Kleiner Bagger
Machine excavatrice dimension reduite

(30) Priority: 24.03.2010 JP 2010067791
(43) Date of publication of application: 06.02.2013
(73) Proprietor: Hitachi Construction Machinery Co., Ltd., Bunkyo-ku Tokyo 112-0004 (JP)
(72) Inventor: TABETA Hiroshi, Tsuchiura-shi Ibaraki 300-0013 (JP); ISHII Hajime, Tsuchiura-shi Ibaraki 300-0013 (JP); KIMURA Shougo, Tsuchiura-shi Ibaraki 300-0013 (JP); TANAKA Tomoyuki, Tsuchiura-shi Ibaraki 300-0013 (JP)
(74) Representative: MERH-IP Matias Erny Reichl Hoffmann Patentanwälte PartG mbB
(86) International application number: PCT/JP2011/053133
(87) International publication number: WO 2011/118285

(56) References cited:
- EP-A1- 1 609 701
- EP-A1- 1 722 038
- JP-A- 2005 067 533
- JP-A- 2005 226 307
- JP-A- 2007 154 444
- US-A1- 2007 046 070

## Description

### TECHNICAL FIELD

The present invention relates to a hydraulic excavator having a cab box on a floor member.

### BACKGROUND ART

Generally, a hydraulic excavator as a construction machine is largely constituted by an automotive lower traveling structure, an upper revolving structure which is swingably mounted on the lower traveling structure, and a working mechanism liftably provided on the front side of the upper revolving structure.

The upper revolving structure is provided with a revolving frame serving as a support structure, a floor member which is provided on the revolving frame, a rear side of which serves as an operator's seat mounting section for mounting an operator's seat, and a front side of which serves as a footrest section on which an operator rests his or her feet, and a cab box provided so as to cover the periphery and the upper side of the floor member to form an operating room above the floor member. Further, a door for opening and closing an entrance way is provided in an outer peripheral side of the cab box at a position corresponding to the footrest section.

In addition, in a small-sized hydraulic excavator called a mini excavator, the floor member is provided with a space, and an indoor unit of an air conditioner for supplying conditioned air to the operating room is disposed in this space. This floor member has a double floor plate structure as an upper floor plate is disposed on an upper side of a lower floor plate where the indoor unit is mounted, such that the upper floor plate covers the indoor unit. In this instance, since the upper floor plate is disposed at a higher position by a portion in which the indoor unit projects from the lower floor plate, a stepped portion which is one stage lower is provided on the entrance way side of the upper floor plate by bending the upper floor plate diagonally downward, so that the operator puts his or her foot on the stepped portion when getting on or off (Patent Document 1: Japanese Patent Laid-Open No.2005-226307 A).

In EP 1722038 A1, on which disclosure the preamble features of claim 1 are based, a washer tank is integrally formed with a front air duct, and the washer tank and the front air duct are installed within a cab. Thus, the washer tank can be installed within the cab by the use of spaces around the air duct. This arrangement makes it possible to install the washer tank within the cab in an unintrusive way and in the vicinity of a washer liquid spout nozzle without necessitating to provide an installation space exclusively for the washer tank.

In EP 1609701 A1 a construction machine having, an automotive vehicular body, an operator's seat provided on said vehicular body for an operator and a floor panel located in front of said operator's seat is described wherein a storage space is provided between a sunken storage portion of the lower floor panel and the upper floor panel for storing equipments or articles which are needed on the machine.

In JP 2007 154444 A, a cab comprises: get-on/off doors for allowing the operator to get on/off the cab; an operator seat; and an air-conditioning unit which is arranged in a front console box. The operator seat, which can slide backward and forward, is arranged in the almost central section of a space formed in the cab, and inside the doors. It is thereby an object to provide a cab for a construction machinery, which facilitates getting on or off the machine for an operator.

In US 2007 046070 A1, a vehicle cab includes a floor, a roof, a front support operably coupling the floor and the roof, and at least two side supports operably coupling the floor and the roof. The vehicle cab further includes a door operably coupled to one of the at least two side supports. The door extend from adjacent the floor toward the roof. It is an object to provide a vehicle cab increasing protection of the operator from injury due to collisions or accidents.

### SUMMARY OF THE INVENTION

Incidentally, with the hydraulic excavator according to the above-described Patent Document 1, since the upper floor plate is disposed upwardly of the lower floor plate, the stepped portion which is formed by diagonally bending the entrance way side of the upper floor plate can be lowered only to the height of the lower floor plate. Accordingly, there is a problem in that the height dimension from the lower traveling structure to the stepped portion is large, making it difficult to get on or off. With the double floor plate structure of the lower floor plate and the upper floor plate, the number of parts increases, and much time and trouble is required in the assembly operation.

In view of the above-described problems of the conventional art, it is an object of the present invention to provide a construction machine in which the door side of the floor member is made sufficiently low to allow the operator to easily put his or her foot thereon and to thereby easily get into and out of the operating room.

This object is attained by the excavator laid down in claim 1.
(1) A construction machine includes: an automotive lower traveling structure, an upper revolving structure which is swingably mounted on the lower traveling structure, and a working mechanism liftably provided on the upper revolving structure, wherein the upper revolving structure is provided with a revolving frame forming a support structure, a floor member provided on the revolving frame and having an operator's seat mounting section at a rear side for mounting an operator's seat and having a footrest section at a front side on which an operator rests his or her feet, and a cab box provided so as to cover periphery and an upper side of the floor member to form an operating room above the floor member, and a door for entering and exiting the operating room is provided in the cab box at a position corresponding to the footrest section of the floor member.
   A characteristic feature of construction adopted in the present invention lies in that the footrest section of the floor member which is provided in the operating room is constitute by a flat operator's seat front plate which is provided in front of the operator's seat and on which an operator rests his or her feet, a downward plate which is set downward from a door side end portion of the operator's seat front plate, and a flat footstep plate which extends from a lower portion of the downward plate toward the door of the cab box and on which the operator puts his or her foot when getting into or out of the operating room.
   With this construction, as the downward plate is extended to the lower side, the position of the footstep plate can be disposed at a low position which is substantially lower from the operator's seat front plate. Therefore, since the height dimension from the top of the lower traveling structure to the footstep plate of the footrest section can be made small, the operator is able to easily put his or her foot on the footstep plate when getting into the operating room from the lower traveling structure. In addition, when getting off the operating room, the operator is able to easily get off from the footstep plate onto the lower traveling structure.
   As a result, since the footrest section constituting the floor member can be provided with the footstep plate at a sufficiently low position, the operator is able to easily perform the action of getting into and out of the operating room. In addition, since the footstep plate is provided on the door side of the footrest section, the operator's seat front plate for the operator seated in the operator's seat to rest his or her feet can be formed large (wide). Meanwhile, since the footstep plate is provided in the operating room enclosed by the cab box, it is possible to prevent the accumulation of such as snow and dust, making it possible to smoothly open and close the door of the cab box. Furthermore, since the downward plate which is set substantially vertically downward is formed between the operator' s seat front plate and the footstep plate, the operator' s seat front plate and the footstep plate can be formed large by making effective use of the limited space.
(2) According to the present invention, a door side portion of the operator's seat mounting section of the floor member serves as a console mounting portion for mounting a console device having an operating lever for operating the working mechanism, and the footstep plate of the footrest section is provided in front of the console mounting portion.
   With this construction, an area located in front of the console device which is provided on a door side portion of the operator's seat mounting section is outside the range where the operator seated in the operator's seat rests his or her feet. Accordingly, as the footstep plate is provided in front of the console device, the footstep plate can be disposed at a position where the operator can easily put his or her foot during getting on or off and where a hindrance is not caused during an operation. Besides, as the footstep plate is disposed in front of the console mounting portion, the width dimension in the left-right direction of this footstep plate can be set to be approximately identical to the width dimension of the console mounting portion. In consequence, the area of the footstep plate can be formed large, so that the operator is able to reliably put his or her foot on the footstep plate.
(3) According to the present invention, a lever/pedal mounting section for mounting an operating lever/pedal is provided in front of the footrest section of the floor member, a notched portion which is notched diagonally from a position corresponding to a front corner portion on a door side of the operator's seat front plate toward the door is formed at an end portion on the door side of the lever/pedal mounting section, a bent edge portion which is bent diagonally along an end portion of the notched portion is formed at a front side position of the downward plate, and an extended portion which is extended in correspondence with the notched portion is formed at a front side position of the footstep plate.
   With this construction, the notched portion which is diagonally notched toward the door is formed at a door side end portion of the lever/pedal mounting section, and the bent edge portion which is bent along the end portion of the notched portion is formed at a front side position of the downward plate, thereby making it possible to provide the extended portion on the front side of the footstep plate. Accordingly, the footstep plate can be formed widely in the front-back direction by the portion of the extended portion provided. Hence, even at the narrow portion on the front side of the operator's seat mounting section, the operator can reliably put his or her foot on the footstep plate while avoiding the pedal positioned at the front side of the footstep plate.
(4) According to the present invention, a floor back accommodating space is formed on a back surface side of the footrest section of the floor member by making use of a height dimension of the downward plate provided between the operator's seat front plate and the footstep plate, an indoor unit of an air conditioner for conditioning intake air into cool air or warm air being mounted in the floor back accommodating space.

With this construction, the floor back accommodating space can be provided on the back surface side of the footrest section by making use of the difference in height between the operator's seat front plate and the footstep plate, namely, the height dimension of the downward plate. Hence, the indoor unit of the air conditioner can be mounded on the back surface side of the floor member by being located in the floor back accommodating space.

### BRIEF DESCRIPTION OF THE DRAWINGS

Fig. 1 is a front view illustrating a hydraulic excavator which is applied to an embodiment of the present invention.
Fig. 2 is a plan view illustrating in enlarged form the hydraulic excavator shown in Fig. 1.
Fig. 3 is an external perspective view, taken from the rear side, of the hydraulic excavator with a working mechanism and a cab box omitted and with a floor member tilted up.
Fig. 4 is an external perspective view taken from the front side and illustrating an upper revolving structure in enlarged form.
Fig. 5 is an external perspective view of the upper revolving structure shown in Fig. 4 with a door open.
Fig. 6 is a transverse cross-sectional view, taken from the direction of arrows VI - VI in Fig. 1, of a floor member, an operator's seat, various operating levers, pedals, a cab box, and the like.
Fig. 7 is an external perspective view illustrating the floor member, the operator's seat, the various operating levers, the pedals, and the like.
Fig. 8 is an external perspective view illustrating from the front side the floor member as a single unit.
Fig. 9 is an external perspective view illustrating from the rear side the floor member as a single unit.

### MODE FOR CARRYING OUT THE INVENTION

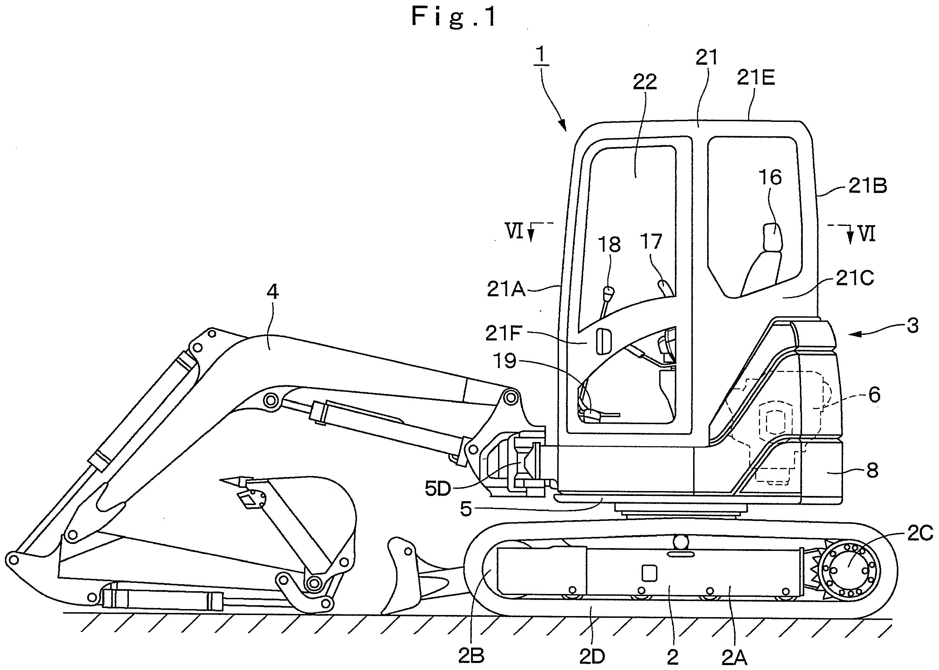

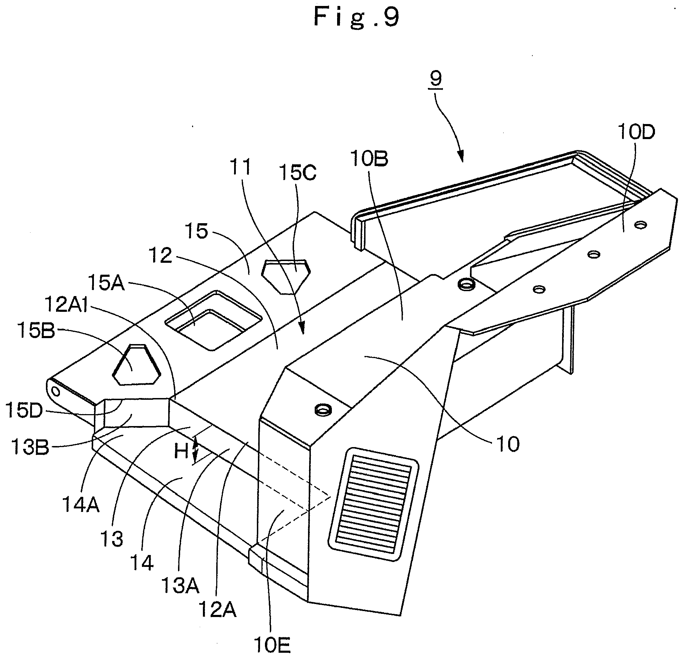

Hereafter, with reference to Figs. 1 to 9, a detailed description will be given by citing as an example a cab-furnished type hydraulic excavator as a construction machine which is applied to an embodiment of the present invention.

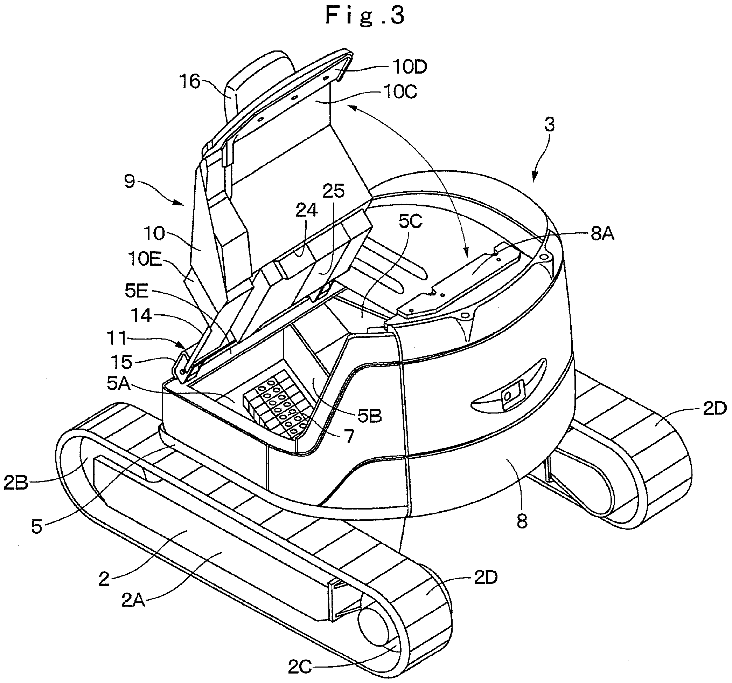

In Fig. 1, designated at 1 is a cab-furnished type hydraulic excavator as a construction machine which is applied to this embodiment, and the hydraulic excavator 1 is a small-sized hydraulic excavator called mini excavator and which is suitable for operations at narrow worksites. Further, the hydraulic excavator 1 is constituted by an automotive lower traveling structure 2, an upper revolving structure 3 which is swingably mounted on the lower traveling structure 2, and a working mechanism 4 provided on the front side in the front-back direction of the upper revolving structure 3 to perform the operation of such as excavating earth and sand. As shown in Fig. 3, the lower traveling structure 2 has left and right truck side frames 2A, and each truck side frame 2A has a crawler belt 2D wound therearound by means of an idler wheel 2B and a drive wheel 2C at front and rear positions.

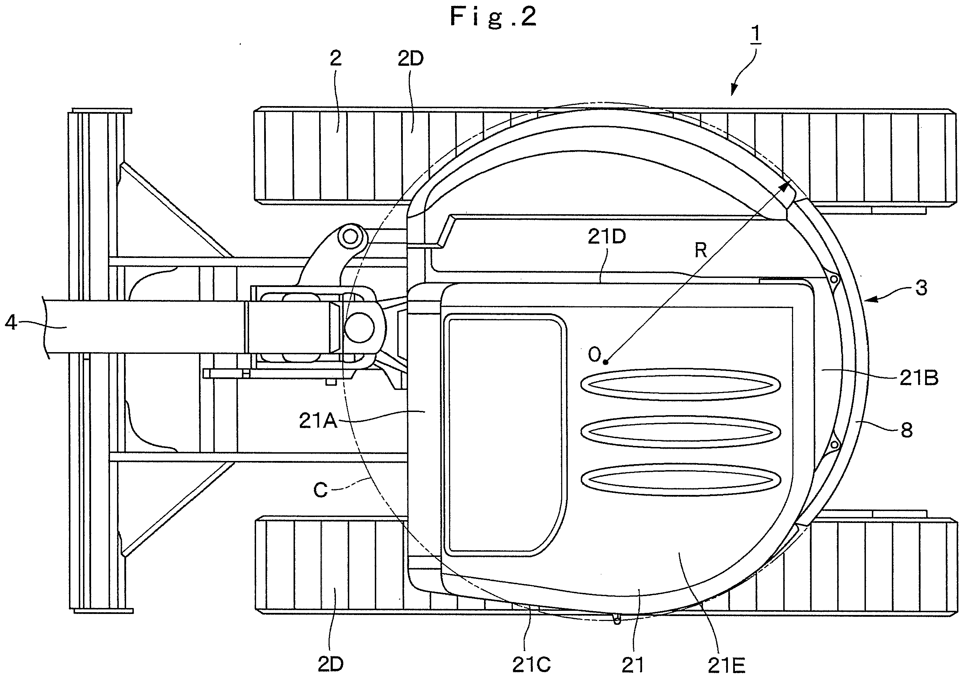

Here, as shown in Fig. 2, the upper revolving structure 3 has a width dimension in the left-right direction which is substantially equal to the vehicle width of the lower traveling structure 2, and is formed in a substantially circular shape, as viewed from above, so as to fall within an imaginary circle C which has a revolving radius R and has a revolving center O as a center. In consequence, the hydraulic excavator 1 is configured as a rear small turn type hydraulic excavator in which when the upper revolving structure 3 revolves on the lower traveling structure 2 about the revolving center O, a rear surface of a below-described counterweight 8 falls substantially within the vehicle width of the lower traveling structure 2.

It shouldbe noted that the aforementioned revolving radius R is defined by the distance from the revolving center O to the rear surface of the counterweight 8, and the aforementioned imaginary circle C is a locus of the rear surface of the counterweight 8 when the upper revolving structure 3 revolves. In addition, this imaginary circle C is set such as to fall within the vehicle width in the left-right direction of the lower traveling structure 2, and even if this imaginary circle C projects from the vehicle width, the amount of its projection is a slight dimension.

Here, the upper revolving structure 3 is constituted by a revolving frame 5, the counterweight 8, a floor member 9, an operator's seat 16, a cab box 21, and the like which will be described later. Hereafter, a detailed description will be given thereof.

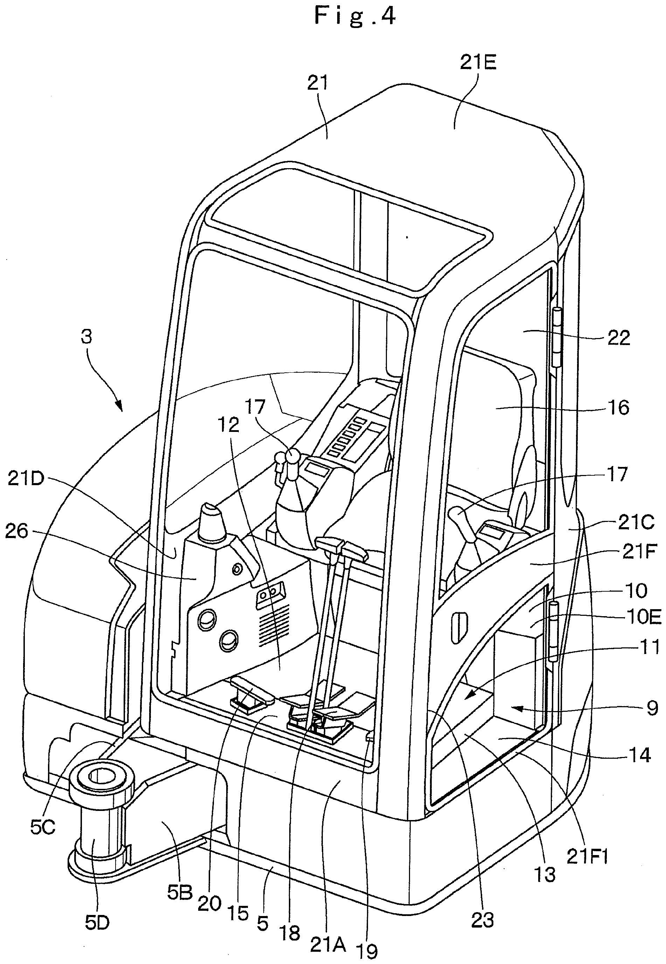

Designated at 5 is the revolving frame constituting a support structure of the upper revolving structure 3. As shown in Figs. 3 and 4, this revolving frame 5 is largely constituted by a flat plate-shaped bottom plate 5A extending in the front-back direction at an intermediate portion in the left-right direction; a left vertical plate 5B and a right vertical plate 5C which are erected in a substantially V-shape on an upper surface side of the bottom plate 5A in such a manner as to be spaced apart from each other in the left-right direction; a support bracket 5D provided at front end portions of the vertical plates 5B and 5C to support the working mechanism 4; and a front beam 5E which is provided in such a manner as to extend in the left-right direction by being located in a left front portion and on which a front side portion of the below-described floor member 9 is mounted.

Indicated at 6 is an engine (illustrated by a dotted line in Fig. 1) which is mounted on the rear side of the revolving frame 5, and the engine 6 is for rotatively driving a hydraulic pump. In addition, indicated at 7 is a control valve unit (see Fig. 3) which is mounted on the left front side of the revolving frame 5, and the control valve unit 7 is mounted on the bottom plate 5A by being located on the lower side of a footrest section 11 (indoor unit 25) of the below-described floor member 9, namely, on the left side of the left vertical plate 5B of the revolving frame 5. In this instance, the control valve unit 7 and pipings which are connected to the control valve unit 7 are located immediately below the indoor unit 25 when the floor member 9 is tilted down, but a clearance for preventing mutual interference is provided between the control valve unit 7 and the indoor unit 25 for reasons which will be described later.

Indicated at 8 is the counterweight provided in a rear portion of the revolving frame 5, and the counterweight 8 is for keeping a weight balance with the working mechanism 4. This counterweight 8 is formed in such a manner as to be curved in a circular arc shape so as to cover the engine 6 from behind. Further, as shown in Fig. 3, the counterweight 8 is provided with a floor mounting portion 8A for mounting a mounting plate portion 10D of an operator's seat mounting section 10 for constituting the below-described floor member 9.

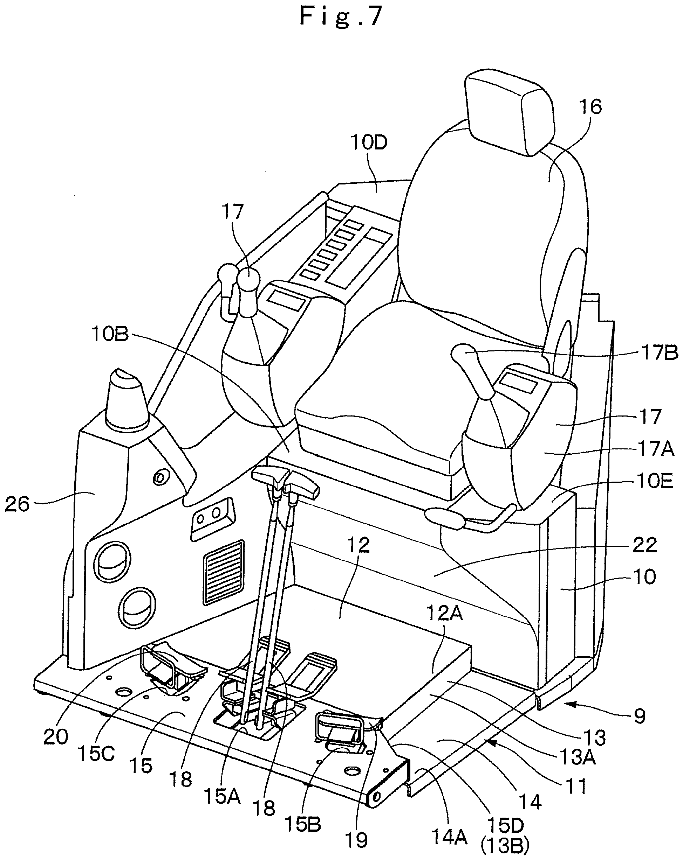

Designated at 9 is the floor member provided on the revolving frame 5 nearer the left side. This floor member 9 is tiltably supported at its front side position by the front beam 5E of the revolving frame 5 and is supported at its rear side position on an upper portion of the counterweight 8 by means of the floor mounting portion 8A. In consequence, the floor member 9 together with the operator's seat 16, the cab box 21, and the like can be tilted up (the state of Fig. 3) and tilted down (the state of Fig. 1) by using the front side position as a fulcrum. Further, as shown in Figs. 7 to 9, the floor member 9 is largely constituted by the operator's seat mounting section 10, the footrest section 11, and a lever/pedal mounting section 15, which will be described hereinafter.

Denoted at 10 is the operator's seat mounting section 10 which is formed in a stepped shape by being located on the rear side of the floor member 9. The operator's seat mounting section 10 is for mounting the below-described operator's seat 16 thereon. Here, the operator's seat mounting section 10 is constituted by a front plate portion 10A extending upwardly from a rear portion of the footrest section 11, a substantially flat seat plate portion 10B extending rearwardly from an upper portion of the front plate portion 10A to mount the operator's seat 16 thereon, a back plate portion 10C extending upwardly from a rear portion of the seat plate portion 10B, and the mounting plate portion 10D extending rearwardly from an upper portion of the back plate portion 10C. The mounting plate portion 10D is supported in a vibration isolated state by the floor mounting portion 8A on top of the counterweight 8 when the floor member 9 is tilted down.

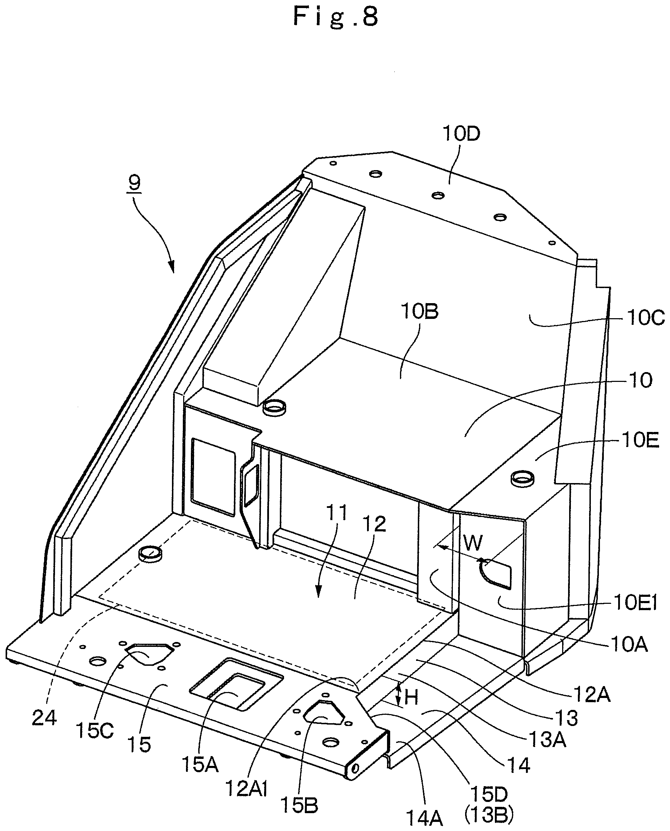

Further, a left side portion of the operator's seat mounting section 10, which is on the side of a door 21F of the below-described cab box 21, is formed as a console mounting portion 10E for mounting a below-described left side console device 17. As shown in Fig. 8, a front side of this console mounting portion 10E is a front face portion 10E1 and is located on the left side of the front plate portion 10A. The width dimension in the left-right direction of the front face portion 10E1 is set to a large dimension W (see Fig. 8) so as to be able to allow an operation mode changeover valve (not shown) and the like to be disposed inside it.

Denoted at 11 is the footrest section which is provided in front of the operator's seat mounting section 10 for the operator seated in the operator's seat 16 to rest his or her feet thereon. This footrest section 11 is provided at a position corresponding to the door 21F of the cab box 21. Meanwhile, the footrest section 11 has both functions of a portion where the operator rests his or her feet during the operation and a portion where the operator puts his or her foot when getting on or off. Further, the footrest section 11 is formed in a stepped shape by an operator's seat front plate 12, a downward plate 13, and a footstep plate 14 which will be described hereinunder.

Indicated at 12 is the operator's seat front plate provided in the footrest section 11 in front of the operator's seat 16. This operator's seat front plate 12 is formed as a rectangular flat plate provided for a wide range from a right end portion to the console mounting portion 10E of the operator's seat mounting section 10, namely, for a range of the width in the left-right direction of the seat plate portion 10B. As for the operator's seat front plate 12, its left side end portion 12A which is on the door 21F side substantially conforms to a right end portion of the console mounting portion 10E.

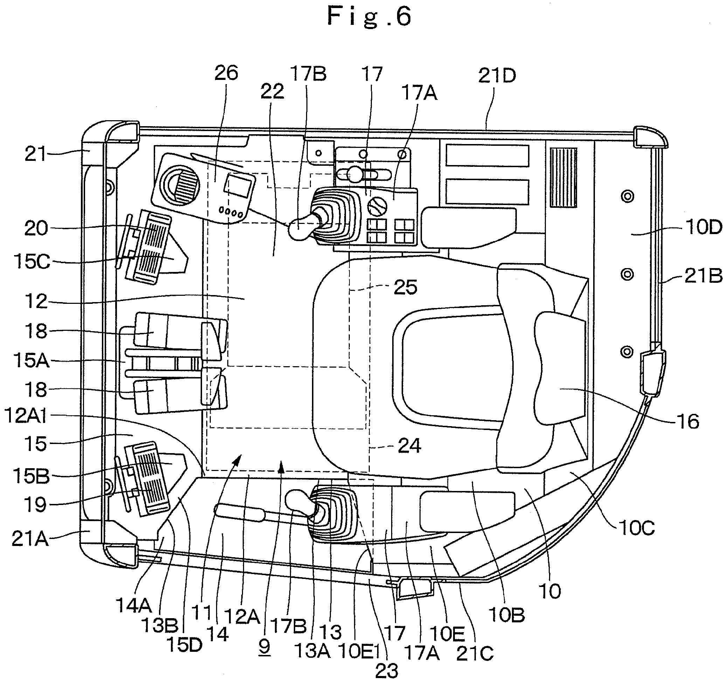

Here, as shown in Fig. 6, the width in the left-right direction of the operator's seat front plate 12 is formed to be wider than the width of the seat of the operator's seat 16, and therefore provides an ample space for the operator to rest his or her feet. Meanwhile, since the left side of the operator's seat front plate 12 reaches a substantially central position of a spare operating pedal 19, the operator is able to rest on this operator's seat front plate 12 his or her left foot for operating the spare operating pedal 19.

Indicated at 13 is the downward plate which is provided in such a manner as to be set vertically downward from the left side end portion 12A of the operator's seat front plate 12. This downward plate 13 is constituted by a linear plate portion 13A extending in the front-back direction along the left side end portion 12A and by a bent edge portion 13B which is bent at a front end portion of the linear plate portion 13A diagonally along an end portion of a notched portion 15D of the below-described lever/pedal mounting section 15. This bent edge portion 13B is provided by being bent at an angle corresponding to the notched portion 15D of the lever/pedal mounting section 15. Further, as the downward plate 13 is formed in such a manner as to be set vertically downward, the downward plate 13 allows both the operator's seat front plate 12 and the footstep plate 14 to be formed large without wastage.

Indicated at 14 is the flat footstep plate provided in such a manner as to extend from a lower portion of the downward plate 13 toward the door 21F side (left side). This footstep plate 14 is for the operator to put his or her foot thereon when getting into or out of the operating room 22. As shown in Figs. 7 to 9, the footstep plate 14 is disposed at a position substantially lower from the operator's seat front plate 12, specifically at a heightwise position equivalent to that of a lower end portion of the lever/pedal mounting section 15. Thus, the footstep plate 14 can be provided at a low position which is substantially lower from the operator's seat front plate 12 without being restrained by the heightwise position of the operator's seat front plate 12 of the footrest section 11. In consequence, the height dimension from the crawler belt 2D of the lower traveling structure 2 to the footstep plate 14 can be made small. Meanwhile, the footstep plate 14 is capable of preventing the accumulation of such as snow and dust by being provided inside the operating room 22.

Meanwhile, an extended portion 14A which is extended toward the door 21F with an opening angle identical to that of the notched portion 15D of the lever/pedal mounting section 15 is formed at a front side position of the footstep plate 14. Namely, as the extended portion 14A is provided, the footstep plate 14 has a trapezoidal shape extending toward the front side. Thus, as the footstep plate 14 at its front side position is formed as the extended portion 14A, the footstep plate 14 can be formed widely up to the front side by this extended portion 14A while avoiding the spare operating pedal 19.

Here, the footstep plate 14 is provided at a place which is outside the range where the operator seated in the operator's seat 16 rests his or her feet, specifically at a position located in front of the console mounting portion 10E (left side console device 17) of the operator's seat mounting section 10. Namely, the footstep plate 14 disposed on the front side of the console mounting portion 10E is provided with a width dimension which is approximately equivalent to the width dimension W of the front face portion 10E1 of the console mounting portion 10E (however, the width dimension is slightly narrower on the extended portion 14A side). In consequence, since the footstep plate 14 can be formed widely in the direction of getting on or off, the footstep plate 14 can be disposed at a position where the operator can easily put his or her foot during getting on or off and where a hindrance is not caused during an operation.

In this case, as for the operator's seat front plate 12, the downward plate 13, and the footstep plate 14, a method is adopted in which they are integrally formed by bending a rectangular plate material into a crank shape, or a method in which they are integrally formed by securing together a plurality of plate materials by a welding means.

Indicated at 15 is the lever/pedal mounting section provided in front of the footrest section 11, and the lever/pedal mounting section 15 extends in the left-right direction along a front end of the operator's seat front plate 12. This lever/pedal mounting section 15 is provided with a central opening 15A located in the center in the left-right direction to mount a below-described operating lever/pedal 18 for traveling, a left opening 15B located on the left side of the central opening 15A, and a right opening 15C located on the right side of the central opening 15A. Below-described pedals 19 and 20 for swinging the working mechanism 4 and driving optional hydraulic equipment (not shown) are respectively mounted in these left and right openings 15B and 15C.

In addition, the notched portion 15D, which is diagonally notched from a position corresponding to a front corner portion 12A1 of the left side end portion 12A of the operator' s seat front plate 12 toward the door 21F, is provided at an end portion on the door 21F side of the lever/pedal mounting section 15. Thus, as the left side end portion of the lever/pedal mounting section 15 is formed as the notched portion 15D, the footstep plate 14 can be formed widely up to the front side while avoiding the spare operating pedal 19.

Indicated at 16 is the operator's seat provided above the floor member 9, and the operator's seat 16 is installed in a central position in the left-right direction of the seat plate portion 10B for constituting the operator' s seat mounting section 10. Further, the operator's seat 16 is for the operator to be seated when operating the hydraulic excavator 1.

Indicated at 17 are the console devices which are arranged on both left and right sides of the operator's seat 16, and each console device 17 has an operating lever 17B for work operation at a front side position of a console 17A in which various switches, display units, and the like are provided. This operating lever 17B is for operating the working mechanism 4 and the like by being tilted in the front-back direction or the left-right direction. Here, the left side console device 17 is mounted on the console mounting portion 10E of the operator's seat mounting section 10 for constituting the floor member 9, while the right side console device 17 is mounted on a right side portion of the seat plate portion 10B of the operator's seat mounting section 10.

Indicated at 18 is the operating lever/pedal for traveling which is provided in the lever/pedal mounting section 15 of the floor member 9 which is located in front of the operator's seat 16. This operating lever/pedal 18 is provided by being located in the central opening 15A of the lever/pedal mounting section 15, so as to be capable of performing a tilting operation in the front-back direction.

Further, indicated at 19 is the spare operating pedal which is provided in the left opening 15B of the lever/pedal mounting section 15 by being located on the left side of the operating lever/pedal 18. This spare operating pedal 19 is for being operated when driving hydraulic equipment (not shown) such as a breaker which is additionally provided. Indicated at 20 is an operating pedal for swinging which is provided in the right opening 15C of the lever/pedal mounting section 15 by being located on the right side of the operating lever/pedal 18. This operating pedal 20 is for performing a swinging operation of the working mechanism 4 in the left-right direction.

Denoted at 21 is the cab box (see Figs. 4 to 6) which is provided on the floor member 9, and the cab box 21 is for covering the periphery and the upper side of the below-described floor member 9. This cab box 21 is formed into a box shape by a front surface portion 21A, a rear surface portion 21B, a left side surface portion 21C, a right side surface portion 21D, and a top surface portion 21E, and the lower end portion of the cab box 21 is mounted to the peripheral edge of the floor member 9. In consequence, the cab box 21 forms above the floor member 9 the operating room 22 which serves as an occupying space for the operator.

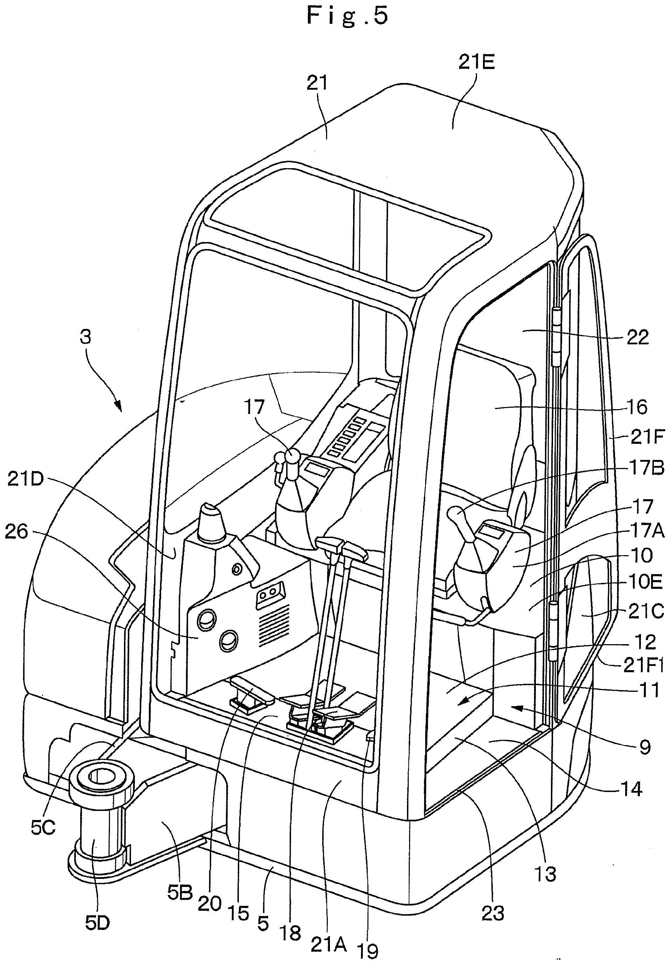

The door 21F for entering and exiting the operating room 22 is openably provided in the left side surface portion 21C at a position corresponding to the footrest section 11 of the floor member 9. This door 21F is for opening and closing an entrance way 23 provided on the left side of the footrest section 11, and a door lower end portion 21F1 is at the same heightwise position as the footstep plate 14. Here, as shown in Fig. 5, when the door 21F is opened, the operator is able to enter and exit the operating room 22 through the entrance way 23. At this time, the operator is able to easily get on or off by putting his or her foot on the footstep plate 14 of the footrest section 11 provided at a low position.

Denoted at 24 is a floor back accommodating space (see Fig. 3) provided on the back surface side of the footrest section 11, and the floor back accommodating space 24 is formed on the back surface side of the operator's seat front plate 12 by making use of a height dimension H of the downward plate 13 provided between the operator's seat front plate 12 and the footstep plate 14 of the footrest section 11. In consequence, the floor back accommodating space 24 has a width dimension in the left-right direction of a size sufficient to accommodate the indoor unit 25 of a below-described air conditioner.

Since the floor back accommodating space 24 makes use of the difference in height between the operator's seat front plate 12 and the footstep plate 14, namely, the height dimension H of the downward plate 13, the dimension by which the indoor unit 25 projects downward can be kept small. In consequence, even in cases where the floor member 9 is tilted down, a clearance can be provided between, on the one hand, the indoor unit 25 provided in the floor back accommodating space 24 and, on the other hand, the control valve unit 7 and the pipings which are located below the indoor unit 25, thereby making it possible to prevent their mutual interference.

Further, denoted at 25 is the indoor unit of the air conditioner which is provided on the back surface side of the floor member 9. The indoor unit 25 is constituted by an evaporator, a heater, a blower fan (none are shown), and the like. This indoor unit 25 is mounted on a back surface of the operator's seat front plate 12 of the footrest section 11 by being located in the floor back accommodating space 24. Further, the indoor unit 25 functions to condition intake air into cool air or warm air and supply this conditioned air into the operating room 22 through such as an air conditioner duct 26 (see Fig. 7) provided on the right side of the floor member 9.

The hydraulic excavator 1 according to this embodiment has the above-described construction, and a description will next be given of its operation.

First, when entering the operating room 22, the operator opens the door 21F of the cab box 21, gets on the crawler belt 2D of the lower traveling structure 2, and puts from this crawler belt 2D his or her foot on the footstep plate 14 formed in the footrest section 11 of the floor member 9. At this time, since the footstep plate 14 is provided at a position lower than the operator's seat front plate 12, the operator is able to easily puts his or her foot on the footstep plate 14 from the crawler belt 2D, and is able to enter the operating room 22 through the entrance way 23. The operator who entered the operating room 22 gets on the operator' s seat front plate 12 from the footstep plate 14, and is seated in the operator's seat 16.

As the operator who is seated in the operator's seat 16 operates the operating lever/pedal 18 for traveling, the lower traveling structure 2 is caused to travel. In addition, by operating the operating levers 17B of the left and right side console devices 17, the operator is able to operate the working mechanism 4 and the like to perform such as the operation of excavating earth and sand.

Meanwhile, when getting off the operating room 22, as the operator puts his or her foot on the footstep plate 14, the operator is able to easily stretch his or her foot onto the crawler belt 2D of the lower traveling structure 2, and is able to land on the ground by means of this crawler belt 2D.

Thus, according to this embodiment, the footrest section 11 of the floor member 9, which is provided in the operating room 22 enclosed by the cab box 21, is constituted by the flat operator's seat front plate 12 which is provided on the front side of the operator's seat 16 in an opposing manner and on which the operator rests his or her feet, the downward plate 13 which is set downward from the left side end portion 12A which is the door 21F side of the operator's seat front plate 12, and the flat footstep plate 14 which extends leftwardly from a lower portion of the downward plate 13 toward the door 21F and on which the operator puts his or her foot when getting into or out of the operating room 22.

Accordingly, the footstep plate 14 can be provided at a position lower than the operator's seat front plate 12 at a position where the operator can put his or her foot when getting into or out of the operating room 22. In this instance, as the downward plate 13 is extended to the lower side, the footstep plate 14 can be disposed at a low position which is substantially lower from the operator's seat front plate 12. In consequence, since the height dimension from the top of the crawler belt 2D of the lower traveling structure 2 to the footstep plate 14 can be made small, the operator is able to easily put his or her foot on the footstep plate 14 when getting into the operating room 22 from top of the crawler belt 2D. Meanwhile, when getting off the operating room 22, the operator is able to easily get off from the footstep plate 14 onto the crawler belt 2D.

As a result, since the footrest section 11 of the floor member 9 can be provided with the footstep plate 14 at a sufficiently low position, the operator is able to easily perform the action of getting into and out of the operating room 22. In addition, since the footstep plate 14 is provided in the footrest section 11 on the door 21F side of the cab box 21, it is possible to secure the space for the operator seated in the operator's seat 16 to rest his or her feet, namely, the operator's seat front plate 12 having a wide area. Meanwhile, since the footstep plate 14 is provided in the operating room 22 enclosed by the cab box 21, it is possible to prevent the accumulation of such as snow and dust, making it possible to smoothly open and close the door 21F of the cab box 21.

The operator's seat front plate 12, the downward plate 13, and the footstep plate 14 can be integrally formed by, for example, bending a plate material or by welding plate-like parts. As a result, all of the operator's seat front plate 12, the downward plate 13 and the footstep plate 14 can be handled as single parts, so that the assembly workability and the like can be improved by simplifying the construction. Further, since the downward plate 13 connecting the operator's seat front plate 12 and the footstep plate 14 is set substantially vertically downward, it is possible to make effective use of the limited space within the operating room 22, and both the operator's seat front plate 12 and the footstep plate 14 can be formed large.

Meanwhile, the footstep plate 14 of the footrest section 11 is arranged to be provided in front of the console mounting portion 10E of the operator's seat mounting section 10. In this instance, since the front side of the left side console device 17 is outside the range where the operator seated in the operator's seat 16 rests his or her feet, the footstep plate 14 can be disposed at a position where the operator can easily put his or her foot during getting on or off and where a hindrance is not caused during an operation.

As the footstep plate 14 is disposed on the front side of the console mounting portion 10E, this footstep plate 14 can be formed with a width dimension approximately identical to the width dimension W of the front face portion 10E1 of the console mounting portion 10E. In consequence, since the footstep plate 14 can be formed widely in the direction of getting on and off, the operator is able to reliably put his or her foot on the footstep plate 14 having a wide area.

Further, the lever/pedal mounting section 15 for mounting the operating lever/pedal 18 is provided in front of the footrest section 11 of the floor member 9, and the notched portion 15D, which is diagonally notched from a position corresponding to the front corner portion 12A1 of the left side end portion 12A of the operator's seat front plate 12 toward the door 21F, is formed at a left side end portion of this lever/pedal mounting section 15. Meanwhile, the bent edge portion 13B which is bent diagonally along the end portion of the notched portion 15D is formed at a front side position of the downward plate 13. Accordingly, the extended portion 14A can be formed at a front side position of the footstep plate 14 by the notched portion 15D and the bent edge portion 13B. As a result, the footstep plate 14 is able to have its area formed widely by the portion of the extended portion 14A, so that the operator can reliably put his or her foot on the footstep plate 14. Moreover, the extended portion 14A can be provided at a position where the spare operating pedal 19 which is disposed on the left side of the lever/pedal mounting section 15 is avoided.

Furthermore, the floor back accommodating space 24 can be formed on the back surface side of the footrest section 11 of the floor member 9 by making use of the height dimension H of the downward plate 13 provided between the operator's seat front plate 12 and the footstep plate 14. Since this floor back accommodating space 24 makes use of the height dimension H of the downward plate 13, namely, a difference in height between the operator's seat front plate 12 and the footstep plate 14, the indoor unit 25 of the air conditioner can be accommodated in a state in which the dimension by which the indoor unit 25 projects downwardly of the footstep plate 14 is kept small. In consequence, a clearance for arranging pipings and performing maintenance can be secured between the indoor unit 25 and equipment such as the control valve unit 7 which are mounted on the revolving frame 5 side.

It should be noted that, in the embodiment, a description has been given by citing as an example the case in which the floor member 9 is arranged to be tiltable up and down with its front side position as a fulcrum with respect to the revolving frame 5. However, the present invention is not limited to the same, and is also applicable to, for example, a hydraulic excavator of the type in which the floor member is fixedly provided on the revolving frame.

Further, in the embodiment, a description has been given by citing as an example of the construction machine the cab-furnished type hydraulic excavator 1 having the crawler type lower traveling structure 2. However, the present invention is not limited to the same, and may be applied to a hydraulic excavator having, for example, a wheel type lower traveling structure.

### DESCRIPTION OF REFERENCE NUMERALS

- 1:: Hydraulic excavator (Construction machine)
- 2:: Lower traveling structure
- 3:: Upper revolving structure
- 4:: Working mechanism
- 5:: Revolving frame
- 7:: Control valve unit
- 9:: Floor member
- 10:: Operator's seat mounting section
- 10B:: Seat plate portion
- 10E:: Console mounting portion
- 11:: Footrest section
- 12:: Operator's seat front plate
- 12A:: Left side end portion (Door side end portion)
- 12A1:: Front corner portion
- 13:: Downward plate
- 13A:: Linear plate portion
- 13B:: Bent edge portion
- 14:: Footstep plate
- 14A:: Extended portion
- 15:: Lever/pedal mounting section
- 15D:: Notched portion
- 16:: Operator's seat
- 17:: Console device
- 17A:: Console
- 17B:: Operating lever
- 19:: Spare operating pedal
- 21:: Cab box
- 21F:: Door
- 22:: Operating room
- 23:: Entrance way
- H:: Height dimension of the downward plate

## Claims

1. A small-sized hydraulic excavator including: an automotive lower traveling structure (2), an upper revolving structure (3) which is swingably mounted on said lower traveling structure (2), and a working mechanism (4) liftably provided on said upper revolving structure (3), wherein
said upper revolving structure (3) is provided with a revolving frame (5) forming a support structure, an engine (6) mounted on a rear side of said revolving frame (5), a counterweight (8) provided in a rear portion of said engine (6) for keeping a weight balance with said working mechanism (4) and has a rear surface formed to be curved in a circular arc shape in such a manner as to fall substantially within the vehicle width of said lower traveling structure (2), a floor member (9) provided on said revolving frame (5) having an operator's seat mounting section (10) at a rear side for mounting an operator's seat (16) and having a footrest section (11) at a front side on which an operator rests his or her feet, and a cab box (21) provided so as to cover periphery and an upper side of said floor member (9) to form an operating room (22) above said floor member (9),
a door (21F) for entering and exiting said operating room (22) is provided in said cab box (21) at a position corresponding to said footrest section (11) of said floor member (9), :
said footrest section (11) of said floor member (9) which is provided in said operating room (22) is constituted by a flat operator's seat front plate (12) which is provided in front of said operator's seat (16) and on which an operator rests his or her feet, a downward plate (13) which is set downward from a door side end portion (12A) of said operator's seat front plate (12), and a flat footstep plate (14) which extends from a lower portion of said downward plate (13) toward said door (21F) of said cab box (21) and on which the operator puts his or her foot when getting into or out of said operating room (22),
said operator's seat front plate (12), said downward plate (13), and said footstep plate (14) of said floor member (9) are integrally formed by bending a plate material or by welding a plurality of plate materials,
a floor back accommodating space (24) is formed on a back surface side of said footrest section (11) of said floor member (9) by making use of a height dimension of said downward plate (13) provided between said operator's seat front plate (12) and said footstep plate (14), and
an indoor unit (25) of an air conditioner for conditioning intake air into cool air or warm air being mounted in said floor back accommodating space (24), the small-sized hydraulic excavator is **characterized in that**:
said operator's seat mounting section (10) which is formed in a stepped shape by being located on a rear side of said floor member (9) is constituted by a front plate portion (10A) extending upwardly from a rear portion of said footrest section (11), a seat plate portion (10B) extending rearwardly from an upper portion of said front plate portion (10A) to mount said operator's seat (16) thereon, a back plate portion (10c) extending upwardly from a rear portion of said seat plate portion (10B), and a mounting plate portion (10D) extending rearwardly from an upper portion of said back plate portion (10C),
said operator's seat front plate (12) is formed as a rectangular flat plate provided for a wide rage from a right end portion to a console mounting portion (10E) of said operator's seat mounting section (10) and for a range of the width in the left-right direction of said seat plate portion (10B),
a lever/pedal mounting section (15) for mounting an operating lever/pedal (18) is provided in front of said footrest section (11) of said floor member (9),
a notched portion (15D) which is notched diagonally from a position corresponding to a front corner portion (12A1) on a door (21F) side of said operator's seat front plate (12) toward said door (21F) is formed at an end portion on said door (21F) side of said lever/pedal mounting section (15),
a bent edge portion (13B) which is bent diagonally along an end portion of said notched portion (15D) is formed at a front side position of said downward plate (13),
an extended portion (14A) which is extended in correspondence with said notched portion (15D) is formed at a front side position of said footstep plate (14) and,
said footstep plate (14) is disposed at a height wise position equivalent to that of a lower end position of said lever/pedal mounting section (15).

2. The small-sized hydraulic excavator according to claim 1, wherein a door (21F) side portion of said operator's seat mounting section (10) of said floor member (9) serves as said console mounting portion (10E) for mounting a console device (17) having an operating lever (17B) for operating said working mechanism (4), and
said footstep plate (14) of said footrest section (11) is provided in front of said console mounting portion (10E).

3. The small-sized hydraulic excavator according to claim 2, wherein said footstep plate (14) disposed in front of said console mounting portion (10E) is provided to have a width dimension approximately identical to the width dimension (W) in the left-right direction of said console mounting portion (10E).

## Patentansprüche

1. Kleiner Hydraulikbagger, der umfasst: eine selbstfahrende untere Fahrstruktur (2), eine obere Drehstruktur (3), die schwenkbar auf der unteren Fahrstruktur (2) montiert ist, und einen Arbeitsmechanismus (4), der anhebbar auf der oberen Drehstruktur (3) bereitgestellt ist, wobei
die obere Drehstruktur (3) mit Folgendem versehen ist: einem Drehrahmen (5), der eine Trägerstruktur bildet, einer Kraftmaschine (6), die auf einer hinteren Seite des Drehrahmens (5) montiert ist, einem Gegengewicht (8), das in einem hinteren Abschnitt der Kraftmaschine (6) bereitgestellt ist, um ein Gleichgewicht mit dem Arbeitsmechanismus (4) aufrechtzuerhalten, und eine hintere Oberfläche aufweist, die in einer kreisförmigen Bogenform in einer solchen Weise gekrümmt ausgebildet ist, dass sie im Wesentlichen in die Fahrzeugbreite der unteren Drehstruktur (2) fällt, einem Bodenelement (9), das auf dem Drehrahmen (5) bereitgestellt ist und einen Bedienersitz-Montageabschnitt (10) zum Montieren eines Bedienersitzes (16) an einer hinteren Seite aufweist und einen Fußstützabschnitt (11) an einer vorderen Seite aufweist, auf den eine Bedienperson ihre Füße stellt, und einer Kabinenbox (21), die so bereitgestellt ist, dass sie einen Umfang und eine obere Seite des Bodenelements (9) umkleidet, um einen Bedienungsraum (22) oberhalb des Bodenelements (9) zu bilden,
eine Tür (21F) zum Betreten und Verlassen des Bedienungsraums (22) in der Kabinenbox (21) an einer Position bereitgestellt ist, die dem Fußstützabschnitt (11) des Bodenelements (9) entspricht,
der Fußstützabschnitt (11) des Bodenelements (9), der in dem Bedienungsraum (22) bereitgestellt ist, aus einer Bedienersitz-Frontplatte (12), die vor dem Bedienersitz (16) bereitgestellt ist und auf die eine Bedienperson ihre Füße stellt, einer abwärtsgerichteten Platte (13), die von einem Türseiten-Endbereich (12A) der Bedienersitz-Frontplatte (12) nach unten angeordnet ist, und einer flachen Trittplatte (14), die sich von einem unteren Abschnitt der abwärtsgerichteten Platte (13) in Richtung der Tür (21F) der Kabinenbox (21) erstreckt und auf die die Bedienperson ihren Fuß setzt, wenn sie sich in den oder aus dem Bedienungsraum (22) bewegt, besteht,
die Bedienersitz-Frontplatte (12), die abwärtsgerichtete Platte (13) und die Trittplatte (14) des Bodenelements (9) einstückig durch Biegen eines Plattenmaterials oder durch Verschweißen mehrerer Plattenmaterialien ausgebildet sind,
ein Bodenrückseiten-Aufnahmeraum (24) auf einer hinteren Oberflächenseite des Fußstützabschnitts (11) des Bodenelements (9) unter Verwendung einer Höhenabmessung der abwärtsgerichteten Platte (13), die zwischen der Bedienersitz-Frontplatte (12) und der Trittplatte (14) bereitgestellt ist, ausgebildet ist und
eine Inneneinheit (25) einer Klimaanlage zum Aufbereiten von Ansaugluft zu kühler Luft oder warmer Luft in dem Bodenrückseiten-Aufnahmeraum (24) montiert ist, wobei der kleine Hydraulikbagger **dadurch gekennzeichnet ist, dass**
der Bedienersitz-Montageabschnitt (10), der in einer gestuften Form ausgebildet ist, indem er an einer hinteren Seite des Bodenelements (9) angeordnet ist, aus einem Frontplattenabschnitt (10A), der sich von einem hinteren Abschnitt des Fußstützabschnitts (11) nach oben erstreckt, einem Sitzplattenabschnitt (10B), der sich von einem oberen Abschnitt des Frontplattenabschnitts (10A) nach hinten erstreckt, um den Bedienersitz (16) darauf zu montieren, einem Rückplattenabschnitt (10C), der sich von einem hinteren Abschnitt des Sitzplattenabschnitts (10B) nach oben erstreckt, und einem Montageplattenabschnitt (10D), der sich von einem oberen Abschnitt des Rückplattenabschnitts (10C) nach hinten erstreckt, besteht,
die Bedienersitz-Frontplatte (12) als rechteckige flache Platte ausgebildet ist, die für einen großen Bereich von einem rechten Endabschnitt zu einem Konsolenmontageabschnitt (10E) des Bedienersitz-Montageabschnitts (10) und für einen Bereich der Breite des Sitzplattenabschnitts (10B) in der Links-Rechts-Richtung bereitgestellt ist,
ein Hebel-/Pedal-Montageabschnitt (15) zum Montieren eines Bedienungshebels/-pedals (18) vor dem Fußstützabschnitt (11) des Bodenelements (9) bereitgestellt ist,
ein eingekerbter Abschnitt (15D), der von einer Position, die einem vorderen Eckabschnitt (12A1) auf einer Seite der Tür (21 F) der Bedienersitz-Frontplatte (12) entspricht, diagonal in Richtung der Tür (21F) eingekerbt ist, an einem Endabschnitt des Hebel-/Pedal-Montageabschnitts (15) auf der Seite der Tür (21F) ausgebildet ist,
ein gebogener Randabschnitt (13B), der entlang eines Endabschnitts des eingekerbten Abschnitts (15D) diagonal gebogen ist, an einer Vorderseitenposition der abwärtsgerichteten Platte (13) ausgebildet ist,
ein erweiterter Abschnitt (14A), der sich in Übereinstimmung mit dem eingekerbten Abschnitt (15D) erstreckt, an einer Vorderseitenposition der Trittplatte (14) ausgebildet ist, und
die Trittplatte (14) in einer Höhenposition angeordnet ist, die äquivalent zu der einer unteren Endposition des Hebel-/Pedal-Montageabschnitts (15) ist.

2. Kleiner Hydraulikbagger nach Anspruch 1, wobei ein Abschnitt des Bedienersitz-Montageabschnitts (10) des Bodenelements (9) auf der Seite der Tür (21F) als Konsolenmontageabschnitt (10E) zum Montieren einer Konsolenvorrichtung (17), die einen Bedienungshebel (17B) zum Bedienen des Arbeitsmechanismus (4) aufweist, dient, und
die Trittplatte (14) des Fußstützabschnitts (11) vor dem Konsolenmontageabschnitt (10E) bereitgestellt ist.

3. Kleiner Hydraulikbagger nach Anspruch 2, wobei die Trittplatte (14), die vor dem Konsolenmontageabschnitt (10E) bereitgestellt ist, eine Breitenabmessung aufweist, die etwa gleich der Breitenabmessung (W) des Konsolenmontageabschnitts (10E) in der Links-Rechts-Richtung ist.

## Revendications

1. Excavateur hydraulique de petite taille incluant : une structure de déplacement inférieure automotrice (2), une structure tournante supérieure (3) qui est montée en pivotement sur ladite structure de déplacement inférieure (2), et un mécanisme de travail (4) prévu de manière à pouvoir être soulevé sur ladite structure tournante supérieure (3), dans lequel
ladite structure tournante supérieure (3) est pourvue d'un châssis tournant (5) formant une structure de support, d'un moteur (6) monté sur un côté arrière dudit châssis tournant (5), d'un contrepoids (8) prévu dans une portion arrière dudit moteur (6) pour garder un équilibre de poids avec ledit mécanisme de travail (4), et possède une surface arrière formée incurvée sous forme d'un arc circulaire de telle manière qu'elle tombe sensiblement à l'intérieur de la largeur du véhicule dans ladite structure de déplacement inférieur (2), un élément de plancher (9) prévu sur ledit châssis tournant (5), ayant une section de montage (10) pour un siège d'opérateur sur un côté arrière pour monter un siège d'opérateur (16) et ayant une section de repose-pieds (11) sur un côté avant, sur lequel un opérateur repose son ou ses pieds, et une boîte formant cabine (21) prévue de manière à couvrir une périphérie et un côté supérieur dudit élément de plancher (9) pour former un compartiment d'opérateur (22) au-dessus dudit élément de plancher (9),
une porte (21F) pour entrer et pour sortir dudit compartiment d'opérateur (22) est prévue dans ladite boîte formant cabine (21) à une position correspondant à ladite section de repose-pieds (11) dudit élément de plancher (9),
ladite section de repose-pieds (11) dudit élément de plancher (9) qui est prévue dans ledit compartiment d'opérateur (22) est constituée par une plaque avant plane (12) dudit siège d'opérateur, qui est prévue en avant dudit siège d'opérateur (16) et sur laquelle un opérateur repose son ou ses pieds, une plaque descendante (13) qui est placée en descendant depuis une portion terminale côté porte (12a) de ladite plaque avant du siège d'opérateur (12), et une plaque de marchepied plane (14) qui s'étend depuis une portion inférieure de ladite plaque descendante (13) vers ladite porte (21F) de ladite boîte formant cabine (21) et sur laquelle l'opérateur place son ou ses pieds lorsqu'il entre ou qu'il sort dudit compartiment d'opérateur (22),
ladite plaque avant pour siège d'opérateur (12), ladite plaque descendante (13), et ladite plaque de marchepied (14) dudit élément de plancher (9) sont intégralement formées en pliant un matériau en plaque ou en soudant une pluralité de matériaux en plaque,
un espace de logement (24) à l'arrière du plancher est formé sur un côté de surface arrière de ladite section de marchepied (11) dudit élément de plancher (9) en utilisant une dimension en hauteur de ladite plaque descendante (13), prévu entre ladite plaque avant (12) du siège d'opérateur et ladite plaque de marchepied (14), et
une unité intérieure (25) d'un appareil de conditionnement d'air pour conditionner l'air admis en donnant de l'air froid ou de l'air chaud, montée dans ledit espace de logement (27) à l'arrière du plancher, l'excavateur hydraulique de petite taille étant **caractérisé en ce que** :
ladite section de montage (10) du siège d'opérateur, qui est formée sous une forme de gradin et qui est située sur un côté arrière dudit élément de plancher (9), est constituée par une portion en plaque avant (10A) s'étendant vers le haut depuis une portion arrière de ladite section de marchepied (11), une portion en plaque de siège (10B) s'étendant vers l'arrière depuis une portion supérieure de ladite portion de plaque avant (10A) pour monter ledit siège d'opérateur (16) sur elle-même, une portion de plaque arrière (10C) s'étendant vers le haut depuis une portion arrière de ladite portion de plaque de siège (10B), et une portion de plaque de montage (10D) s'étendant vers l'arrière depuis une portion supérieure de ladite portion de plaque arrière (10C),
ladite plaque avant (12) pour siège d'opérateur est formée comme une plaque plane rectangulaire prévue pour une large étendue depuis une portion d'extrémité droite jusqu'à une portion de montage de console (10E) de ladite section de montage (10) pour siège d'opérateur et pour une étendue de la largeur dans la direction gauche/droite de ladite portion de plaque pour siège (10B),
une section de montage de levier/pédale (15) pour monter un levier/une pédale d'actionnement (18) est prévue en avant de ladite section de repose-pieds (11) dudit élément de plancher (9),
une portion en encoche (15D) qui comporte des encoches en diagonale depuis une position correspondant à une portion de coin avant (12A1) sur un côté de la porte (21F) de ladite plaque avant (12) du siège d'opérateur vers ladite porte (21F) est formée à une portion d'extrémité sur le côté de ladite porte (21F) de ladite section de montage de levier/pédale (15),
une portion de bordure cintrée (13B) qui est cintrée en diagonale le long d'une portion d'extrémité de ladite portion en encoche (15D) est formée à une position du côté avant de ladite plaque descendante (13),
une portion en extension (14A) qui est en extension en correspondance avec ladite portion en encoche (15D) est formée à une position du côté avant de ladite plaque de repose-pieds (14) et
ladite plaque de repose-pieds (14) est disposée à une position en hauteur équivalente à celle d'une position de l'extrémité inférieure de ladite section de montage de levier/pédale (15).

2. Excavateur hydraulique de petite taille selon la revendication 1, dans lequel une portion côté porte (21F) de ladite section de montage (10) pour siège d'opérateur dudit élément de plancher (9) sert de portion de montage de console (10E) pour monter un dispositif à console (17) ayant un levier d'actionnement (17B) pour actionner ledit mécanisme de travail (4), et
ladite plaque de marchepied (14) ou ladite section de repose-pieds (11) est prévue en avant de ladite portion de montage de console (10E).

3. Excavateur hydraulique de petite taille selon la revendication 2, dans lequel ladite plaque de marchepied (14) disposée en avant de ladite portion de montage de console (10E) est prévue de manière à présenter une dimension en largeur approximativement identique à la dimension en largeur (W) dans la direction gauche/droite de ladite portion de montage de console (10E).
